# FASCICULE DE BREVET EUROPEEN

(11) **EP 0 494 566 B1**
(45) Date de publication et mention de la délivrance du brevet: **19.04.1995**
(21) Numéro de dépôt: 91403522.5
(22) Date de dépôt: 23.12.1991
(51) Int. Cl.: B29C 47/06

(54) **Appareillage d'extrusion pour l'obtention d'un profilé à structure alvéolaire en résine thermoplastique.**
Vorrichtung zum Extrudieren von einem Profilelement mit einer hohlförmigen Struktur aus thermoplastischem Kunststoff.
Apparatus for extruding a hollow profiled structure made from a thermoplastic material.

(30) Priorité: 10.01.1991 FR 9100228
(43) Date de publication de la demande: 15.07.1992
(73) Titulaire: SOCIETE ALPHACAN, 78170 La Celle Saint-Cloud (FR)
(72) Inventeur: Prevotat, Bernard, F-78150 Le Chesnay (FR)
(74) Mandataire: Foiret, Claude Serge

(56) Documents cités:
- EP-A- 0 142 338
- FR-A- 1 486 473
- FR-A- 2 142 752
- FR-A- 2 237 754
- FR-A- 2 324 979
- US-A- 4 377 545

## Description

La présente invention concerne un profilé à structure alvéolaire en une seule pièce fabriqué en résine thermoplastique. Il est constitué de deux parois extérieures étroitement liées l'une à l'autre par des parois internes, formant la structure alvéolaire, disposées sensiblement perpendiculairement à l'axe longitudinal du profilé.

Plus particulièrement l'invention concerne un profilé à structure alvéolaire en résine thermoplastique constitué de deux parois extérieures liées l'une à l'autre par des parois internes séparées les unes des autres par des vides d'air formant la structure alvéolaire caractérisé en ce que ladite structure alvéolaire est disposée sensiblement perpendiculairement à l'axe longitudinal du profilé.

L'invention concerne également une tête de répartition d'extrudeuse ou tête d'extrusion divisée en trois canaux superposés pour le passage de la ou des résines thermoplastiques, le canal intermédiaire servant au passage de la matière formant les parois internes. Cette tête de répartition possède en sa sortie un moyen permettant de provoquer une variation alternative de pression pour dévier le flux de matière du canal intermédiaire tantôt vers le canal permettant le passage du flux de matière formant la paroi supérieure du profilé, tantôt vers le canal permettant le passage du flux de matière formant la paroi inférieure du profilé.

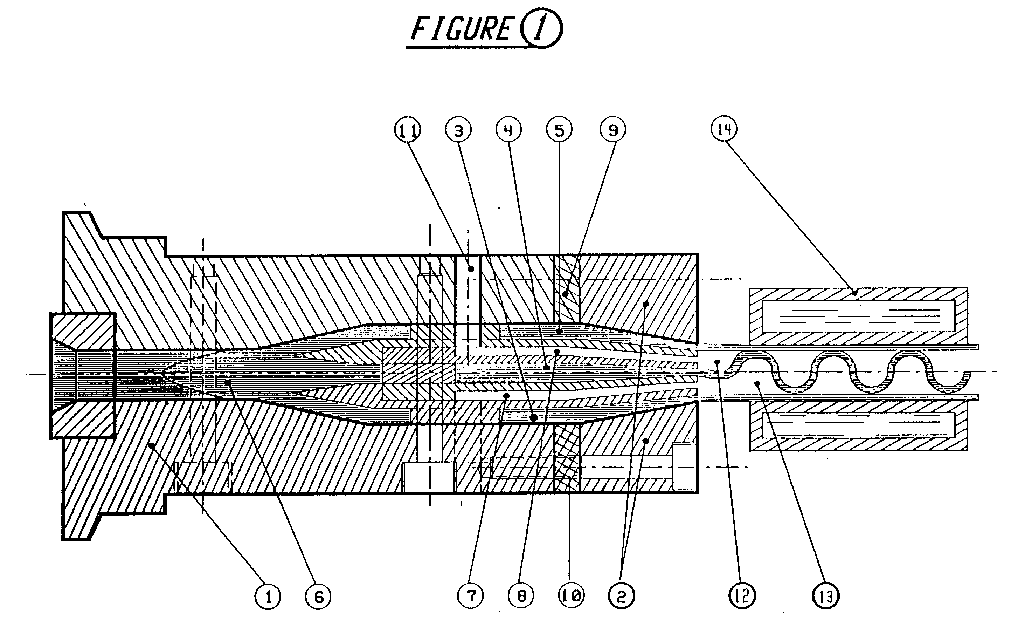

Le brevet FR-A-1 486 473 montre a sa figure 1 un appareillage d'extrusion comportant trois filières cylindriques dont seules les lèvres sont représentées.

Des orifices multiples forés dans l'épaisseur des lèvres des filières permettent soit d'envoyer, soit de retirer de l'air entre les espaces annulaires compris entre le tube externe et le tube intermédiaire ou le tube intermédiaire et le tube interne. On obtient ainsi deux tubes concentriques qui sont entretoisés par un tube en accordéon compris entre eux.

Dans l'utilisation de cet appareillage, si les trois tubes ont des épaisseurs égales ou quasi-égales, les alternances de pression (ou de dépression) affectent alors les trois tubes et l'on obtient le matériau représenté sur les figures 7 à 9. Ce matériau présente un profil radial de section variable.

Le but principal de la présente invention est de fournir un appareillage ne conduisant pas a cet inconvénient.

Ce but est atteint par un appareillage d'extrusion de tube à structure alvéolaire, comportant disposés selon un axe longitudinal une tête d'extrusion et un outillage d'extrusion comprenant un ensemble filière - poinçon , ladite tête renfermant un canal externe pour le passage d'une résine thermoplastique destinée a former la paroi externe du tube extrudé, un canal intermédiaire pour le passage d'une résine thermoplastique destinée a former la paroi des alvéoles, un canal interne pour le passage d'une résine thermoplastique destinée a former la paroi interne du tube, ces trois canaux étant dans la tête sensiblement surperposés et débouchant sensiblement au niveau de trois canaux correspondants de l'outillage d'extrusion le canal externe étant séparé du canal intermédiaire par un premier canal annexe, le canal interne étant séparé du canal intermédiaire par un second canal annexe, chaque canal annexe pouvant être respectivement raccordé a un système de mise sous pression ou dépression, caractérisé en ce que les trois canaux correspondants de l'outillage d'extrusion, se terminent sensiblement dans un même plan orthogonal a l'axe longitudinal et a l'intérieur de l'outillage d'extrusion permettant ainsi la formation des alvéoles du tube a l'intérieur dudit outillage.

Selon l'invention on extrude ou coextrude initialement sensiblement parallèlement trois paraisons de résine thermoplastique. Deux paraisons externes, destinées à la formation des parois supérieure et inférieure du profilé alvéolaire final, encadrent la troisième paraison intermédiaire qui est ensuite déviée, dans l'outillage d'extrusion, de façon alternative pour venir se fixer successivement sur la paroi supérieure et sur la paroi inférieure.

Bien que l'invention concerne tout type de profilé, elle s'applique particulièrement aux tubes à structure alvéolaire telle que précédemment définie.

Les profilés à structure alvéolaire, c'est-à-dire formés de deux surfaces unies l'une à l'autre par des parois internes espacées laissant des vides d'air sont connues pour remplacer, avec des propriétés sensiblement équivalentes, les profilés pleins lourds et onéreux du fait de la quantité de matière nécessaire à la réalisation d'un matériau rigide et robuste. Actuellement les profilés commercialisés à structure alvéolaire en résine thermoplastique sont uniquement constitués de deux parois liées l'une à l'autre par des parois internes, formant cloisons, disposées longitudinalement par rapport à l'axe du profilé. Ces profilés à alvéoles longitudinales à section circulaire ou rectangulaire répondent au critère d'allègement. Toutefois, en particulier dans les cas des tubes, ces profilés génèrent, dans leurs alvéoles entre les parois, des passages parasites de fluide auxquels on remédie par des raccords spéciaux ou des dispositifs de jonction particuliers.

Les profilés selon l'invention permettent, entre autres, de remédier à ces inconvénients du fait que ces alvéoles sont diposés transversalement, donc étanches, et non plus longitudinalement, cela pour des propriétés identiques entre les matériaux.

L'appareillage permettant de réaliser de tels profilés est constitué d'une tête d'extrusion chauffée et régulée permettant le passage de trois flux de matière thermoplastique à l'état fondu. Ces flux de matière thermoplastique provenant d'au moins une extrudeuse d'alimentation sont disposés sensiblement de façon superposée.

Entre ces flux est prévu un moyen de variation de pression tel qu'un canal annexe permettant une circulation d'air ou de gaz ou encore une prise du vide.

L'appareillage est également constitué de l'outillage d'extrusion dans lequel convergent les trois flux et où au point de convergence les deux flux externes constituent les surfaces supérieure et inférieure du profilé fini, tandis que le flux intermédiaire est mis en contact alternativement avec chacune des surfaces.

Cette mise en contact du flux intermédiaire avec les deux surfaces permet non seulement de créer les alvéoles mais encore de maintenir l'écartement entre les surfaces supérieure et inférieure jusqu'au refroidissement du profilé final. La mise en contact alternative du flux intermédiaire avec les deux autres flux est provoquée par une variation de pression alternative provoquée entre le flux intermédiaire et le flux de la surface supérieure d'une part et le flux intermédiaire et le flux inférieur d'autre part. Cette déviation alternative du flux intermédiaire peut être provoquée par des envois d'air ou de gaz ou encore des aspirations, dans au moins deux canaux annexes disposés dans la tête d'extrusion, se prolongeant dans la filière et débouchant au point de convergence des flux entre le flux intermédiaire et le flux de la surface supérieure d'une part et le flux intermédiaire et le flux de la surface inférieure d'autre part.

L'explication des Figures annexées permet de mieux comprendre les appareillages et le procède et, d'illustrer les profilés réalisés.

La Figure 1 illustre la coupe d'un appareillage permettant de réaliser un panneau à structure alvéolaire dont les parois des alvéoles liant les surfaces supérieure et inférieure dudit panneau sont disposées sensiblement perpendiculairement à l'axe longitudinal de ce panneau. L'appareillage est constitué de deux éléments fixés l'un à l'autre par des moyens classiques : le tête d'extrusion (1) et l'outillage d'extrusion représenté par la filière (2). La tête d'extrusion est divisée en trois canaux superposés (3)(4)(5) débouchant sensiblement au niveau des trois canaux correspondants de la filière. Les deux canaux (3) et (5) servant au passage de la matière constituant les parois supérieure et inférieure du panneau et le canal intermédiaire (4), servant au passage de la matière pour la fabrication des nervures internes ou les parois des alvéoles du panneau, peuvent être réunis en amont au canal d'alimentation (6) si l'appareillage est alimenté par une seule extrudeuse.

Il n'est cependant pas exclu que, de façon connue, chacun des canaux soit relié individuellement à une extrudeuse dans le cas où le panneau est constitué par exemple de trois matériaux différents et/ou de colorations différentes. Il n'est pas exclu non plus que, de façon également connue, seulement deux canaux soient réunis au canal d'alimentation d'une extrudeuse, le troisième aboutissant au canal d'alimentation d'une seconde extrudeuse ; dans ce cas deux résines thermoplastiques différentes peuvent être utilisées pour réaliser le panneau.

Chacun des canaux (3) et (5) servant au passage de la matière constituant les parois supérieure et inférieure du panneau est séparé du canal intermédiaire (4) par un canal annexe (7)(8), relié à l'extérieur de l'appareillage par une tubulure (11) permettant éventuellement un raccordement à un système quelconque de mise sous pression ou dépression. Ces canaux annexes disposés entre les autres canaux aboutissent dans l'une de leurs extrémités sensiblement au même niveau de sortie que celui desdits autres canaux. L'épaisseur de sortie des canaux (3) et (5) peut être réglée individuellement grâce à des cales mobiles (9) et (10) agissant sur la section de la buse de sortie de ces canaux en permettant de plus ou moins les fermer, par exemple par déplacement axial ou radial.

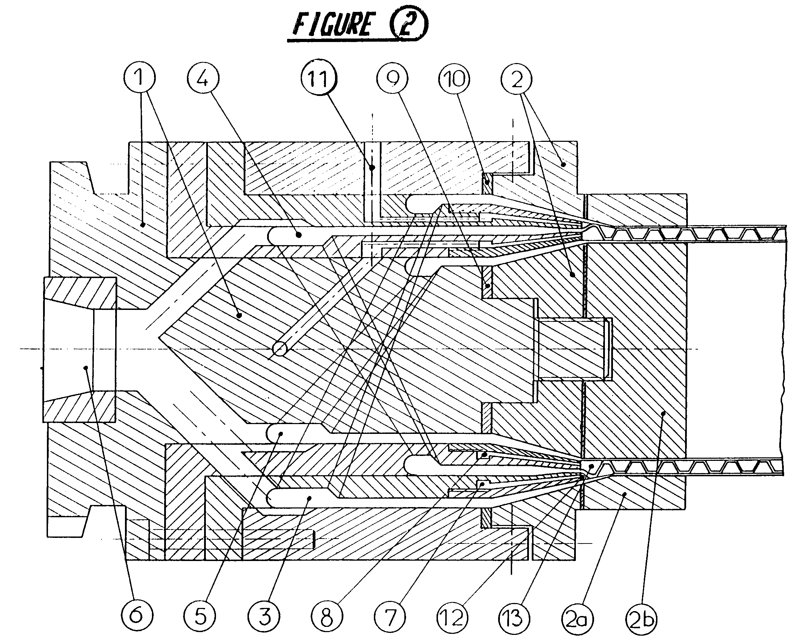

Le refroidissement et la mise en forme définitive peuvent être assurés au moyen d'un dispositif de calibrage (14) classique.
Selon l'invention,la Figure 2 illustre la coupe d'un appareillage permettant de réaliser un tube à structure alvéolaire dont les parois des alvéoles liant les surfaces supérieure et inférieure, ou encore la surface externe du tube et la surface interne du tube, sont disposées sensiblement perpendiculairement à l'axe longitudinal du tube. Cette Figure représente l'aspect préférentiel de l'invention. On entend par tube, tout corps creux de section géométrique constante suivant une direction donnée, mais ne présentant pas nécessairement une symétrie de révolution. L'appareillage est constitué de deux éléments fixés l'un à l'autre par des moyens classiques : la tête d'extrusion (1) et l'outillage d'extrusion (2), lui-même composé de la filière (2a) et du poinçon (2b). La tête d'extrusion est divisée en trois canaux annulaires superposés (3)(4)(5) débouchant sensiblement au niveau des trois canaux correspondant de la filière. Les deux canaux (3) et (5) servant au passage de la matière constituant les parois externe et interne du.tube et le canal intermédiaire (4) servant au passage de la matière pour la fabrication dès nervures internes ou les parois des alvéoles du tube peuvent être réunis en amont des trois répartiteurs de flux au canal d'alimentation (6) si l'appareillage est alimenté par une seule extrudeuse. Il n'est cependant pas exclu que chaque répartiteur de flux des canaux soit relié individuellement de façon connue, à une extrudeuse dans le cas où le tube est constitué par exemple de trois matériaux différents et/ou de colorations différentes.Il n'est pas exclu non plus que seulement deux canaux soient réunis, de façon également connue, en amont de leurs répartiteurs de flux au canal d'alimentation d'une extrudeuse, le troisième répartiteur de flux du dernier canal étant alimenté par une seconde extrudeuse ; dans ce cas les deux résines thermoplastiques constituant le tube peuvent être différentes. Chacun des canaux (3) et (5) servant au passage de la matière constituant les parois interne et externe du tube est séparé du canal intermédiaire (4) par un canal annulaire annexe intermédiaire (7)(8) relié à l'extérieur de l'appareillage par une tubulure (11) permettant un raccordement éventuel à un système quelconque de mise sous pression ou dépression. Ces canaux annexes disposés entre les autres canaux aboutissent dans l'une de leurs extrémités sensiblement au même niveau de sortie que celui desdits autres canaux. L'épaisseur de sortie des canaux (3) et (5) peut être réglée individuellement grâce à des cales mobiles (9) et (10) agissant sur la section de la buse de sortie de ces canaux en permettant de plus ou moins les fermer, par exemple par déplacement axial ou radial.

Le répartiteur de flux dans une tête d'extrusion est connu en lui-même. Il sert à obtenir un flux de matière constant en sortie de l'outillage. Les formes de canaux de répartition (3)(4) et (5) peuvent être fonction des matériaux thermoplastiques mis en oeuvre.

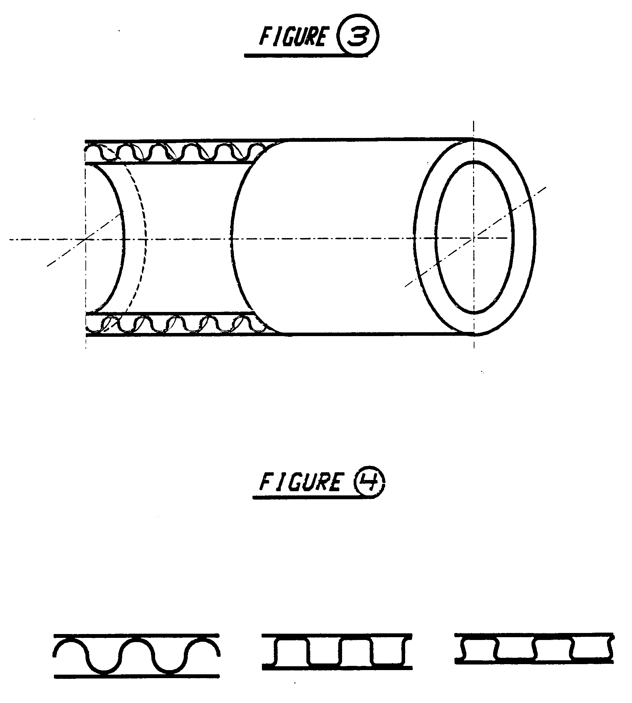

La Figure 3 illustre en arraché un tube alvéolaire obtenu selon l'invention.

Les profilés à structure alvéolaire de l'invention sont obtenus par extrusion ou coextrusion d'au moins une matière thermoplastique. A partir d'au moins une extrudeuse la matière thermoplastique est envoyée dans l'appareillage et le profilé récupéré en sortie d'outillage d'extrusion dans les conditions habituelles et bien connues d'extrusion ou de coextrusion. La caractéristique téristique du procédé permettant de réaliser un profilé à structure alvéolaire dont les parois internes des alvéoles sont disposées sensiblement perpendiculairement à l'axe longitudinal du profilé réside essentiellement dans le traitement du flux de matière destiné à la formation des parois des alvéoles.

Le procédé consiste, tant que le flux intermédiaire de matière sortant de la tête d'extrusion se trouve à l'état fondu, entre le flux de matière thermoplastique destiné à former la surface supérieure ou externe et le flux intermédiaire d'une part et le flux de matière thermoplastique destiné à former la surface inférieure ou interne et le flux intermédiaire d'autre part, à provoquer de façon alternative une variation de pression de façon à créer une ondulation, sensiblement perpendiculaire à l'axe d'extrusion ou de coextrusion de la matière thermoplastique de la veine intermédiaire.

Cette ondulation, créée par la variation de pression citée, peut être provoquée par exemple par surpression par injection alternative d'un gaz ou d'air de part et d'autre de la veine intermédiaire, par dépression par création de vide alternatif de part et d'autre de cette même veine, ou encore par une vitesse d'écoulement de la veine intermédiaire supérieure à celle des deux autres.

L'importance de cette variation de pression alternative permet d'accentuer ou non l'angle d'inclinaison des parois des alvéoles. De même la durée de séquençage entre chaque variation de pression permet de régler le volume des alvéoles. L'importance de la variation de pression dépend de nombreux paramètres en particulier : de l'épaisseur de la veine intermédiaire, du matériau thermoplastique utilisé, de l'angle désiré d'inclinaison des parois, du volume des alvéoles souhaité. l'homme de métier, en fonction de toutes ces considérations, peut adapter la variation de pression selon ses objectifs. Les seules conditions évidentes pour la bonne marche du procédé sont que les variations alternatives de pression d'une part soient suffisantes pour qu'alternativement le flux intermédiaire vienne en contact avec la matière encore à l'état fondu des flux formant les deux autres parois du profilé et d'autre part ne soient pas trop violentes afin d'éviter la détérioration du flux intermédiaire.

La mise en contact de la veine ou paraison intermédiaire avec les autres veines ou paraisons peut être assurée par une vitesse d'écoulement du flux intermédiaire supérieure à celle des flux formant les parois interne et externe. Cette différence de vitesse entraîne une mise en contact de la matière du flux intermédiaire avec celle d'une paroi à laquelle elle se soude. L'excès de matière, dû à la vitesse d'extrusion du flux intermédiaire, est refoulé vers l'autre paroi à laquelle elle se soude, le phénomène se reproduisant de manière alternative. Les variations de pression peuvent dans ce cas être contrôlées ou laissées libres, les mouvements de la paroi intermédiaire aspirant les quantités d'air ou de gaz nécessaires pour remplir les alvéoles. Il est cependant préférable, afin de maîtriser la fréquence et la régularisation des alvéoles de contrôler les variations de pression durant l'extrusion ou la coextrusion.

Afin de mieux l'expliciter le procédé est décrit en se référant aux Figures 1 et 2, tout en sachant que ces Figures illustrent un appareillage alimenté par une seule extrudeuse, mais que le procédé convient tout autant quand l'appareillage est alimenté, après bipassage d'au moins un des canaux (3)(4)(5), par plus d'une extrudeuse.

La matière thermoplastique provenant de l'extrudeuse, non représentée, est diffusée dans les canaux (3)(4) et (5) de l'appareillage alimentés par le canal d'alimentation général (6) relié à l'extrudeuse.

Au plus tard,en sortie de l'outillage chaud, et de façon générale tant que le flux de matière se trouve à l'état fondu, sont créées les ondulations du flux intermédiaire (4) par variation alternative de pression dans les zones (12) et (13) situées. entre les flux à leur point de convergence dans l'outillage d'extrusion. Cette variation alternative de pression dans ces zones est provoquée par une surpression ou une dépression dans les canaux annexes (7) et (8), reliés à l'extérieur, au fur et à mesure de l'avancement de l'extrusion du profilé. Ces prises extérieures peuvent être reliées à tout moyen permettant de créer dans l'appareillage une pression et/ou une dépression. Il n'est en effet pas exclu pour améliorer la formation des parois des alvéoles de créer alternativement à la fois une pression dans un canal intermédiaire et une dépression dans l'autre canal intermédiaire. Les moyens extérieurs de provoquer des pression et/ou dépressions alternatives dans l'appareillage sont connus, il peut par exemple s'agir d'électrovannes reliées à une pompe à vide ou à un compresseur. Comme il a été déjà expliqué, ces prises extérieures peuvent également être éventuellement laissées à l'air libre.

L'épaisseur du profilé est déterminée par l'écoulement relatif des deux parois externe et interne donné par les dispositifs de refroidissement du matériau thermoplastique placés à la sortie de l'outillage chaud. Par exemple un dispositif de refroidissement interne classique peut être placé en extrémité du poinçon pour assurer une constance du diamètre intérieur des tubes. Le refroidissement de la paroi externe des profilés en général peut être assuré par un dispositif de calibrage réfrigéré classique en extrusion.

Le rapprochement relatif des deux parois externe et interne permet de modifier la forme des cloisons des alvéoles comme le montre la Figure 4.

## Revendications

1. Appareillage d'extrusion de tube à structure alvéolaire, comportant disposés selon un axe longitudinal une tête d'extrusion (1) et un outillage d'extrusion (2) comprenant un ensemble filière (2a) - poinçon (2b), ladite tête (1) renfermant un canal externe (3) pour le passage d'une résine thermoplastique destinée à former la paroi externe du tube extrudé, un canal intermédiaire (4) pour le passage d'une résine thermoplastique destinée à former la paroi des alvéoles, un canal interne (5) pour le passage d'une résine thermoplastique destinée à former la paroi interne du tube, ces trois canaux (3) (4) (5) étant dans la tête (1) sensiblement surperposés et débouchant sensiblement au niveau de trois canaux correspondants de l'outillage d'extrusion (2), le canal externe (3) étant séparé du canal intermédiaire (4) par un premier canal annexe (7), le canal interne (5) étant séparé du canal intermédiaire par un second canal annexe (8), chaque canal annexe (7)(8) pouvant être respectivement raccordé à un système de mise sous pression ou dépression, les trois canaux correspondants de l'outillage d'extrusion (2) se terminant sensiblement dans un même plan orthogonal à l'axe longitudinal et caractérisé en ce que les 3 canaux se terminent à l'intérieur de l'outillage d'extrusion (2) permettant ainsi la formation des alvéoles du tube à l'intérieur dudit outillage (2).

2. Appareillage selon la revendication 1, caractérisé en ce que ledit plan orthogonal est situé entre la tête d'extrusion (1) et l'ensemble filière (2a) - poinçon (2b).

3. Appareillage selon la revendication 1 ou 2, caractérisé en ce que l'épaisseur de sortie des canaux correspondants dans l'outillage d'extrusion (2) aux deux canaux externe (3) et interne (5) est réglée au moyen de cales mobiles (9)(10) permettant d'éloigner dans la direction de l'axe longitudinal l'outillage d'extrusion (2) de la tête d'extrusion (1).

## Claims

1. Extrusion apparatus for pipe of cellular structure, comprising, arranged along a lengthwise axis, an extrusion head (1) and an extrusion tool (2) including a die (2a) - mandrel (2b) unit, the said head (1) containing an outer channel (3) for the passage of a thermoplastic resin intended to form the outer wall of the extruded pipe, an intermediate channel (4) for the passage of a thermoplastic resin intended to form the wall of the cells, an inner channel (5) for the passage of a thermoplastic resin intended to form the inner wall of the pipe, these three channels (3) (4) (5) being in the head (1) substantially superposed and emerging substantially at three corresponding channels of the extrusion tool (2), the outer channel (3) being separated from the intermediate channel (4) by a first annexe channel (7), the inner channel (5) being separated from the intermediate channel by a second annexe channel (8), it being possible for each annexe channel (7) (8) to be connected respectively to a system for pressurizing or depressurizing, the three corresponding channels of the extrusion tool (2) ending substantially in the same plane at right angles to the lengthwise axis and characterized in that the 3 channels end inside the extrusion tool (2), thus permitting the formation of the cells of the pipe inside the said tool (2).

2. Apparatus according to Claim 1, characterized in that the said plane at right angles is situated between the extrusion head (1) and the die (2a) - mandrel (2b) unit.

3. Apparatus according to Claim 1 or 2, characterized in that the outlet thickness of the channels corresponding in the extrusion tool (2) to the two outer (3) and inner (5) channels is adjusted by means of movable spacers (9) (10) allowing the extrusion tool (2) to be moved away from the extrusion head (1) in the direction of the lengthwise axis.

## Patentansprüche

1. Vorrichtung zum Extrudieren von Rohren mit zellenartiger Struktur, die auf einer Längsachse angeordnet einen Spritzkopf (1) und ein Extrudierwerkzeug (2) aufweist, das aus einer Einheit Spritzmundstück (2a) - Dornstange (2b) besteht, wobei der genannte Kopf (1) einen äußeren Kanal (3) für den Durchfluß eines Thermoplastharzes zur Bildung der Außenwand des extrudierten Rohrs, einen mittleren Kanal (4) für den Durchfluß eines Thermoplastharzes zur Bildung der Wand der Zellen und einen inneren Kanal (5) für den Durchfluß eines Thermoplastharzes zur Bildung der Innenwand des Rohrs umschließt, wobei diese drei Kanäle (3), (4), (5) in dem Kopf (1) im wesentlichen übereinander liegen und im wesentlichen in Höhe von drei entsprechenden Kanälen des Extrudierwerkzeugs (2) münden, wobei der äußere Kanal (3) von dem mittleren Kanal (4) durch einen ersten Zusatzkanal (7) getrennt ist, der innere Kanal (5) von dem mittleren Kanal durch einen zweiten Zusatzkanal (8) getrennt ist, wobei jeder Zusatzkanal (7), (8) an ein System zum Unter-Druck-Setzen bzw. zum Unter-Unterdruck-Setzen angeschlossen werden kann, wobei die drei entsprechenden Kanäle des Extrudierwerkzeugs (2) im wesentlichen in der gleichen Ebene enden, die senkrecht zur Längsachse steht, dadurch gekennzeichnet, daß die drei Kanäle innerhalb des Extrudierwerkzeugs (2) enden, so daß dadurch die Formung der Zellen des Rohrs innerhalb des genannten Werkzeugs (2) ermöglicht wird.

2. Vorrichtung nach Anspruch 1,
dadurch gekennzeichnet, daß die genannte senkrecht stehende Ebene sich zwischen dem Spritzkopf (1) und der Einheit Spritzmundstück (2a) - Dornstange (2b) befindet.

3. Vorrichtung nach Anspruch 1 oder 2,
dadurch gekennzeichnet, daß die Größe des Ausgangs der den Kanälen (3) und (5) entsprechenden Kanäle in dem Extrudierwerkzeug (2) mit Hilfe von verschiebbaren Scheiben (9), (10) eingestellt wird, mit denen das Extrudierwerkzeug (2) gegenüber dem Spritzkopf (1) in der Richtung der Längsachse verschoben werden kann.
